# EUROPÄISCHE PATENTSCHRIFT

(11) **EP 1 091 040 B1**
(45) Veröffentlichungstag und Bekanntmachung des Hinweises auf die Patenterteilung: **03.05.2006**
(21) Anmeldenummer: 00114506.9
(22) Anmeldetag: 06.07.2000
(51) Int. Cl.: D21D 5/26

(54) **Vorrichtung zum Entgasen von Faserstoffsuspensionen**
Device for degassing fibrous suspensions
Dispositif de dégazage de suspensions fibreuses

(30) Priorität: 06.10.1999 DE 19947905
(43) Veröffentlichungstag der Anmeldung: 11.04.2001
(73) Patentinhaber: Voith Paper Patent GmbH, 89522 Heidenheim (DE)
(72) Erfinder: Binder, Erwin, 89522 Heidenheim (DE); Beuermann, Karl-Heinz, 89518 Heidenheim (DE)

(56) Entgegenhaltungen:
- WO-A-97/15717
- DE-A- 3 219 740

## Beschreibung

Die Erfindung betrifft eine Vorrichtung zum Entgasen von Faserstoffsuspensionen, bestehend aus einem, vorzugsweise langgestreckten und liegenden zylindrischen, Behälter (Hauptbehälter) mit einer horizontalen oder annähernd horizontalen Behälterachse, mindestens einer darin angeordneten, einen Überlauf bildenden Trennwand (Haupttrennwand), mindestens je einen im Behälter angebrachten Stutzen für mindestens eine Faserstoffsuspension, für mindestens eine gasfreie Faserstoffsuspension, für ein abgeschiedenes Gas und mindestens eine mittels des mindestens einen Überlaufs abgeschiedener, überschüssiger Faserstoffsuspension und Mitteln zum Erzeugen eines Unterdrucks im Behälter.

Es kann allgemeingültig festgehalten werden, daß Vorrichtungen zum Entgasen von Faserstoffsuspensionen unter den Fachleuten der Branche am besten durch die Marke DECULATOR® bekannt sind. Ihrem Namen nach sollen die Vorrichtungen Faserstoffsuspensionen entgasen. Gleichzeitig werden durch die Vorrichtungen auch andere leichte Verunreinigungen entfernt, die ansonsten die Papier- oder Kartonherstellung stören würden. Die Vorrichtungen sind große Behälter, den die der Papier- oder Kartonmaschine aufzugebende Faserstoffsuspension als dünnes Gemisch zugeführt wird. Das Funktionsprinzip der Vorrichtung besteht darin, die Faserstoffsuspension unter Unterdruck sieden zu lassen und das Gas dadurch in einen sogenannten Gasraum und aus dem Behälter abzuscheiden und die anderen leichten Verunreinigungen auf der Flüssigkeitsoberfläche im Behälter ausscheiden zu lassen. Die der Papier- oder Kartonmaschine zuzuführende Faserstoffsuspension wird dagegen durch eine Öffnung im Behälterboden entnommen, was natürlich mit dem Gedanken verbunden ist, möglichst gasfreie Faserstoffsuspension aus dem Behälter abzuleiten. Um die Entgasungsfähigkeit der Vorrichtung zu maximieren, wird im Behälter mittels einer Pumpe ein Unterdruck erzeugt, wobei das Gas durch die Unterdruckpumpe (Vakuumpumpe) mit Leitung aus dem Behälter entweicht. Darüber hinaus wird die Entgasungsfähigkeit verbessert, indem die zugeführte, noch Gas enthaltende Faserstoffsuspension durch Strahlrohre oberhalb des Flüssigkeitsstands im Behälter eingegeben wird, wobei das in der zugegebenen Faserstoffsuspension eventuell als Blasen vorhandene Gas bereits abgeschieden wird, bevor die zugegebene Faserstoffsuspension mit der bereits vorhandenen Faserstoffsuspension in Verbindung kommt. Außer zur Stabilisierung des Flüssigkeitsstands kann der (einzige) Überlauf zur Entfernung von auf der Flüssigkeitsoberfläche des Behälters angesammelten leichten Verunreinigungen benutzt werden, damit sie nicht zur Papier- oder Kartonmaschine gelangen. Die leichten Verunreinigungen fließen über den (einzigen) Überlauf zum Ablauf und anschließend zur Weiterbehandlung, wo man bestrebt ist, sie aus der Faserstoffsuspension abzuscheiden und die Faserstoffsuspension in den Kreislauf zurückzuführen.

Weiterhin kann festgehalten werden, daß Vorrichtungen zum Entgasen von Faserstoffsuspensionen in einer Vielzahl von gewerblichen Schriften offenbart wurden, beispielsweise in den beiden deutschen Offenlegungsschriften DE 32 19 740 A1 und DE 42 34 522 A1 und in der US-Patentschrift 5,868,905.

Der der vorliegenden Erfindung am nahekommendste Stand der Technik ist in der PCT-Anmeldung WO 97/15717 zu finden. Sie offenbart einen Entgasungsbehälter, bestehend aus einem Behälter selbst, einer darin angeordneten, einen Überlauf bildenden Trennwand und einem Einlaufstutzen für ein erstes Eingabemedium, einem Auslaufstutzen für ein erstes gasfreies Medium, einem Auslaßstutzen für abgeschiedenes Gas und einem Auslaufstutzen für mittels des Überlaufs erstes abgeschiedenes Medium, wobei alle Stutzen im Behältermantel angeordnet sind. Es ist weiterhin offenbart, daß im gleichen Gasraum eine zweite, einen Überlauf bildende Trennwand angeordnet ist und mindestens einem Einlaufstutzen für ein zweites Eingabemedium, einem Auslaufstutzen für ein zweites Ausgestaltung werden die beiden abgeschiedenen Medien auch über einen gemeinsamen Auslaufstutzen abgeführt.
Nachteilig an dieser WO-Schrift und den anderen zitierten gewerblichen Schriften ist, daß der jeweilige Entgasungsbehälter im Regelfall nur für die Entgasung einer Faserstoffsuspension, im Ausnahmefall für die Entgasung von maximal zwei Faserstoffsuspensionen, ausgebildet ist. Besteht nun aufgrund des Betriebs der Papier- oder Kartonmaschine die Notwendigkeit, drei oder gar mehrere Faserstoffsuspensionen, beispielsweise bei Verwendung eines stoffdichtegeregelten Stoffauflaufs oder eines Mehrschichten-Stoffauflaufs gleichzeitig zu entgasen, so macht es der Stand der Technik notwendig, mehrere Entgasungsbehälter zu betreiben. Dieser Betrieb von Entgasungsbehältern bedingt einen relativ großen Raumbedarf, relativ große Investitionskosten und Betriebskosten, relativ große Wartungsaktivitäten und mehr Personal. Letztendlich kann dieser Betrieb einen negativen Einfluß auf die Runnability der Papier- oder Kartonmaschinen ausüben und somit die Produktivität und das Ergebnis schmälern.

Es ist also Aufgabe der Erfindung, eine Vorrichtung der genannten Art zu schaffen, mit welcher gleichzeitig mehrere Faserstoffsuspensionen unterschiedlicher Zusammensetzung und Beschaffenheit unabhängig voneinander entgast und bei Bedarf zusammengeführt werden können und dabei der für die Vorrichtung benötigte Raumbedarf bei Beibehaltung der qualitativen und funktionellen Eigenschaften der Faserstoffsuspensionen und bei Erhöhung der Runnability der Papier- oder Kartonmaschine reduziert wird.

Gemäß Anspruch 1 wird diese Aufgabe bei einer Vorrichtung der vorgenannten Art dadurch gelöst, daß dem Behälter in Richtung seiner Behälterachse mindestens drei weitere Behälter (Nebenbehälter) nachgeordnet sind, die vorzugsweise im wesentlichen wie der Hauptbehälter ausgebildet sind. Durch diese Anordnung ergeben sich vorteilhafterweise Synergieeffekte hinsichtlich dem Bedarf an Versorgungs- und Entsorgungsleitungen und Raumbedarf, wobei durch die Unabhängigkeit der Behälter ihre jeweiligen Eigenschaften hinsichtlich Funktionalität, Runnability und Qualität gesichert sind. sich vorteilhafterweise Synergieeffekte hinsichtlich dem Bedarf an Versorgungs- und Entsorgungsleitungen und Raumbedarf, wobei durch die Unabhängigkeit der Behälter ihre jeweiligen Eigenschaften hinsichtlich Funktionalität, Runnability und Qualität gesichert sind.

Es ergeben sich weitere Vorteile hinsichtlich Investitionsvolumen, Betriebskosten und Raumbedarf für die Vorrichtung zum Entgasen von Faserstoffsuspensionen, wenn der dem Behälter (Hauptbehälter) in Richtung seiner Behälterachse nachgeordnete weitere Behälter (Nebenbehälter) formschlüssig nachgeordnet ist.

In einer bevorzugten Ausführung der Erfindung ist vorgesehen, daß der im Behälter angebrachte Stutzen für die Faserstoffsuspension mindestens ein zu der Behälterachse paralleles oder annähernd paralleles Verteilungsrohr umfaßt, von dem eine Mehrzahl von aufeinanderfolgenden Strahlrohren zum Einführen der Faserstoffsuspension in den Behälter ausgehen. Weiterhin ist es sowohl konstruktiv als auch funktional vorteilhaft, wenn die Zuführung der Faserstoffsuspension zum Verteilungsrohr seitlich, von oben, vorzugsweise mittig, oder von unten erfolgt.
Alternativ ist in einer weiteren bevorzugten Ausführung der Erfindung vorgesehen, daß der im Behälter angebrachte Stutzen für die Faserstoffsuspension mindestens eine mit dem Behälter kommunizierende und ihr Faserstoffsuspension zuführende Kammer umfaßt, wobei die kommunizierende Kammer oberhalb dem Flüssigkeitsstand der zugeführten Faserstoffsuspension im Behälter liegt.
Diese beiden Ausführungen zur Zuführung der Faserstoffsuspension in den Behälter haben sich in der Praxis mehrfach hinsichtlich ihrer Funktionssicherheit, Wartungsintensität und Qualität bewährt und sie sind überdies noch günstig in der Anschaffung und im Betrieb.

In einer weiteren besonderen Ausgestaltung wird vorgeschlagen, daß zwei oder mehrere Stutzen für je eine Faserstoffsuspension im Behälter angebracht sind, wobei die Faserstoffsuspensionen sich in ihrer Zusammensetzung und Beschaffenheit unterscheiden. Diese Ausgestaltung ermöglicht die Einbringung von mehreren unterschiedlichen Faserstoffsuspensionen in ein und denselben Behälter, um somit konsistenztreue und qualitativ hochwertige Mischungen erzeugen zu können, und dies bei niedrigen Kosten.

In einer Fortführung des Erfindungsgedankens wird auch vorgeschlagen, daß zwei Stutzen für gasfreie Faserstoffsuspension im Behälter, vorzugsweise im Behälterboden, angebracht sind, wobei der Vorteil entsteht, die gasfreie Faserstoffsuspension in strömungstechnisch optimalen und kleinen Leitungen aus dem Behälter abzuziehen. Als konstruktiv vorteilhaft hat es sich erwiesen, wenn zwei Stutzen für gasfreie Faserstoffsuspension, vorzugsweise in Richtung der Behälterachse oder quer zur Richtung der Behälterachse, unmittelbar nebeneinander im Behälter, vorzugsweise im Behälterboden, angebracht sind.

In weiterer Fortführung des Erfindungsgedankens wird auch vorgeschlagen, daß mindestens drei Stutzen für gasfreie Faserstoffsuspension im Behälter, vorzugsweise im Behälterboden, angebracht sind, wobei die mindestens drei Stutzen für gasfreie Faserstoffsuspension in weiterer Ausgestaltung auf einem Teilkreis, vorzugsweise gleichmäßig, im Behälter, vorzugsweise im Behälterboden, angebracht sind. Auch diese Ausführung unterstützt in positiver Weise den Abzug der gasfreien Faserstoffsuspension in strömungstechnisch optimalen und kleinen Leitungen.

Das erfindungsgemäße Mittel zur Abscheidung der einzelnen Faserstoffsuspensionen sieht vor, daß im Behälter mindestens eine Trennwand (Haupttrennwand) zur Abscheidung der überschüssigen Faserstoffsuspension und mindestens eine Trennwand (Nebentrennwand) zur Abscheidung der gasfreien Faserstoffsuspension angeordnet ist. Diese Trennwände ermöglichen das Funktionsprinzip, die Funktionssicherheit und die Runnability des Behälters.

In einer weiteren Ausführung der Erfindung ist vorgesehen, daß die im Behälter eingebauten Trennwände zu einer vertikalen Ebene, vorzugsweise durch den Mittelpunkt des Behälters gehend, spiegelbildlich angeordnet sind, wobei mindestens eine Trennwand (Haupttrennwand) zur Abscheidung der überschüssigen Faserstoffsuspension und mindestens eine Trennwand (Nebentrennwand) zur Abscheidung der gasfreien Faserstoffsuspension dient. Durch diese Ausgestaltung des erfindungsgemäßen Behälters wird sein Wirkungsgrad maßgebend verbessert und sein Raumbedarf maßgebend reduziert.

In einer weiteren vorteilhaften Ausgestaltung der Erfindung ist vorgesehen, daß dem mindestens einen im Behälter, vorzugsweise im Behälterboden, angebrachten Stutzen für mindestens eine gasfreies Faserstoffsuspension mindestens ein hydraulischer Stabilisator nachgeschaltet ist. Hierdurch ergibt sich der Vorteil, daß der hydraulische Stabilisator eine Pufferkapazität für die gasfreie Faserstoffsuspension aufweist und damit das Entstehen von Pulsationen im Konstanten Teil einer Papier- oder Kartonmaschine verhindert.

In einer weiteren Fortführung des Erfindungsgedankens ist der hydraulische Stabilisator für die gasfreie Faserstoffsuspension ein Verweilbehälter mit einer bestimmten Verweildauer V_{D} und mit einem bestimmten Verweilvolumen V_{V}, wobei er zudem eine strömungstechnisch optimale Innenkontur aufweist. Die strömungstechnisch optimale Innenkontur ist die Kontur eines langgestreckten und liegenden Zylinders oder eines in Strömungsrichtung der gasfreien Faserstoffsuspension ausgerichteten konischen Rohrs.

In einer weiteren Ausführung der Erfindung ist vorgesehen, daß, basierend auf Auslegungsüberlegungen für den Konstanten Teil einer Papier- oder Kartonmaschine, die Verweildauer der gasfreien Faserstoffsuspension im hydraulischen Stabilisator zwischen 2 und 60 Sekunden, vorzugsweise zwischen 4 und 25 Sekunden, und das Verweilvolumen der gasfreien Faserstoffsuspension im hydraulischen Stabilisator zwischen 0,8 und 100 m³, vorzugsweise zwischen 4 und 70 m³, ist. Diese Maßangaben besitzen die Vorteile, daß mit Ihnen eine optimale Auslegung des obigen Konstanten Teils und ein optimaler Betrieb der Papier- oder Kartonmaschine hinsichtlich Runnability und dergleichen sichergestellt wird und daß Belegungen beziehungsweise Ablagerungen vermieden werden.

Weiterhin ist es erfindungsgemäß vorteilhaft, wenn die Mittel zum Erzeugen des Unterdrucks im Behälter je ein Unterdruckanschluß, je eine Unterdruckleitung und mindestens eine Unterdruckpumpe mit Leitung sind. Es ist platt selbstverständlich, daß mehrere Unterdruckanschlüsse jeweils einzeln mit einer separaten Unterdruckleitung und einer separaten Unterdruckpumpe als auch mit einzelnen Unterdruckleitungen und einer gemeinsamen Unterdruckpumpe mit Leitung betrieben werden können. Als vorteilhaft hat sich auch erwiesen, wenn die Mittel zum Erzeugen des Unterdrucks in mindestens zwei nebeneinander angebrachten Behältern eine Unterdruckleitung und mindestens eine Unterdruckpumpe mit Leitung sind, wobei die Behälter durch einen Vakuumdurchlaß miteinander verbundenen sind und nur ein Behälter einen mit der Unterdruckleitung verbundenen Unterdruckanschluß aufweist. Hierdurch wird ermöglicht, daß in allen Behältern auf einfacher Weise ein gleicher herrschender Unterdruck realisiert und geregelt werden kann.

Weiterhin ist es erfindungsgemäß vorteilhaft, wenn die Mittel zum Erzeugen des Unterdrucks im Behälter je ein Unterdruckanschluß, je eine Unterdruckleitung und mindestens eine Unterdruckpumpe mit Leitung sind. Es ist platt selbstverständlich, daß mehrere Unterdruckanschlüsse jeweils einzeln mit einer separaten Unterdruckleitung und einer separaten Unterdruckpumpe als auch mit einzelnen Unterdruckleitungen und einer gemeinsamen Unterdruckpumpe mit Leitung betrieben werden können.

In einer weiteren vorteilhaften Ausgestaltung der Erfindung ist vorgesehen, daß im oberen Innenbereich des Behälters mehrere Düsen zur Anfeuchtung der nicht mit Faserstoffsuspension berührten Behälterinnenoberfläche angebracht sind, wodurch der im Behälter ablaufende Prozeß des Entgasens der Faserstoffsuspension positiv hinsichtlich Prozeßgeschwindigkeit und -wirkungsgrad beeinflußt wird.

Weitere Merkmale und Vorteile der Erfindung ergeben sich aus den Unteransprüchen und der nachfolgenden Beschreibung bevorzugter Ausführungsbeispiele unter Bezugnahme auf die Zeichnung.

Es zeigen
- Figur 1:: eine schematisierte und geschnittene Seitenansicht einer vorteilhaften Ausführungsform der erfindungsgemäßen Vorrichtung zum Entgasen von Faserstoffsuspensionen;
- Figur 2:: eine schematisierte und geschnittene Seitenansicht eines weiteren erfindungsgemäßen Nebenbehälters;
- Figur 3:: eine schematisierte und geschnittene Seitenansicht eines weiteren erfindungsgemäßen Nebenbehälters, ähnlich dem der Figur 2;
- Figur 4a:: eine sehr schematisierte und geschnittene Seitenansicht eines weitermen erfindungsgemäßen Nebenbehälters;
- Figur 4b:: einen schematisierten Schnitt quer zur Richtung der Behälterachse eines weiteren erfindungsgemäßen Nebenbehälters; und
- Figur 4c:: eine schematisierte Draufsicht auf den Behälterboden eines weiteren erfindungsgemäßen Nebenbehälters.

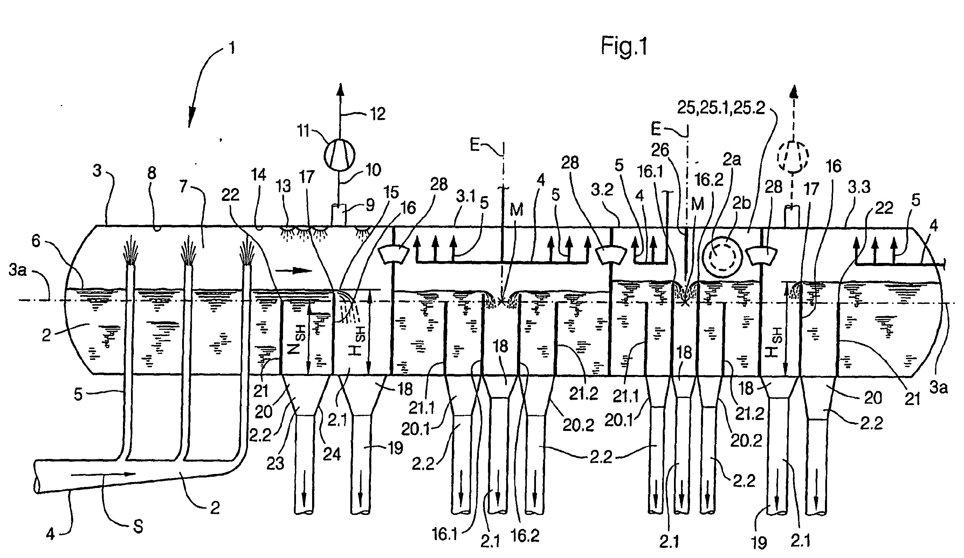

Figur 1 zufolge besteht die erfindungsgemäße Vorrichtung 1 zum Entgasen von Faserstoffsuspensionen 2 aus einem langgestreckten und liegenden zylindrischen Behälter 3 mit einer Behälterachse 3a, dem die der Papier- oder Kartonmaschine aufzugebende Faserstoffsuspension 2 als dünnes Gemisch über mindestens ein zu der Behälterachse 3a paralleles Verteilrohr 4, von dem eine Mehrzahl von aufeinanderfolgenden Strahlrohren 5 zum Einführen von Faserstoffsuspension 2 in den Behälter 3 ausgehen, zugeführt wird. Die Strömungsrichtung S der Faserstoffsuspension 2 wird übergeordnet mit einem Richtungspfeil dargestellt. Um die Entgasungsfähigkeit der Vorrichtung 1 zu verbessern, wird die zugeführte, noch Gas enthaltende Faserstoffsuspension 2 durch Strahlrohre 5 oberhalb des Flüssigkeitsstands 6 im Behälter 3 eingegeben, wobei das in der zugegebenen Faserstoffsuspension 2 eventuell als Blasen vorhandene Gas 7 bereits abgeschieden wird, bevor die zugegebene Faserstoffsuspension 2 mit der bereits im Behälter 3 vorhandenen Faserstoffsuspension 2 in Verbindung kommt. Die Strahlrohre 5 enden in dargestellter und bevorzugter Ausführung kurz vor der Behälterdecke 8, wodurch der Entgasungsprozeß der Faserstoffsuspension 2 nochmals positiv unterstützt wird, da die Faserstoffsuspension 2 an die Behälterdecke 8 prallt. Im oberen Bereich der Behälterdecke 8 ist ein Unterdruckanschluß 9 mit einer Unterdruckleitung 10 angebracht, die wiederum an eine Unterdruckpumpe 11 mit einer weiterführenden, nicht vollständig dargestellten Leitung 12 angeschlossen ist; der Unterdruckanschluß 9 kann alternativ auch im seitlichen Bereich der Behälterdecke 8 angebracht sein. Durch den Anschluß des Behälters 3 an die Unterdruckpumpe 11 wird die Entgasungsfähigkeit der Vorrichtung 1 maximiert, wobei das Gas 7 durch die Unterdruckpumpe 11 aus dem Behälter 3 gepumpt wird. Weiterhin sind im den Strahlrohren 7 abgewandten Bereich der Behälterdecke 8 mehrere, nicht näher dargestellte Düsen 13 zur Anfeuchtung der nicht mit Faserstoffsuspension 2 berührten Behälterinnenoberfläche 14 angebracht. Durch diese Maßnahme wird der im Behälter 3 ablaufende Entgasungsprozeß der Faserstoffsuspension 2 positiv hinsichtlich Prozeßgeschwindigkeit und -wirkungsgrad beeinflußt. Im dem Verteilrohr 4 abgewandten Teil des Behälters 3 ist eine einen Überlauf 15 bildende Haupttrennwand 16 mit einer Oberkante 17 und mit einer Stauhöhe H_{SH} angebracht. Der Haupttrennwand 16 nachgeordnet ist -in Strömungsrichtung der Faserstoffsuspension 2 gesehen- ein Austrittsstutzen 18. Dem Austrittsstutzen 18 ist ein anfänglich dargestelltes Leitungssystem 19 zum Zurückführen der im Behälter 3 eingetretenen überschüssigen, eventuell mit leichten Verunreinigungen versetzten Faserstoffsuspension 2.1 zurück in den nicht dargestellten, dem Fachmann jedoch bekannten Kreislauf angeschlossen. Der Haupttrennwand 16 vorgeordnet ist -in Strömungsrichtung der Faserstoffsuspension gesehen- ein Austrittsstutzen 20 für gasfreie Faserstoffsuspension 2.2, wobei dem Austrittsstutzen 20 -in Strömungsrichtung der Faserstoffsuspension gesehen- eine Nebentrennwand 21 mit einer Oberkante 22 und mit einer Stauhöhe N_{SH} vorgeordnet ist. Hinsichtlich der Anordnung der Austrittsstutzen 18 und 20 samt ihrer nicht näher bezeichneten Vorderkanten und Hinterkanten und der Trennwände gelten die in der nicht vorveröffentlichten deutschen Patentanmeldung DE 199 46 575 der Anmelderin gemachten Ausführungen. Dem Austrittsstutzen 20 für gasfreie Faserstoffsuspension 2.2 ist ein hydraulischer Stabilisator 23 unmittelbar nachgeordnet. Der dargestellte hydraulische Stabilisator 23 für die gasfreie Faserstoffsuspension 2.2 ist als ein Verweilbehälter und weist die Form eines in Strömungsrichtung S der gasfreien Faserstoffsuspension 2.2 ausgerichteten konischen Rohrs 24 auf. Der hydraulische Stabilisator 23 ist erfindungsgemäß derart ausgelegt, daß die Verweildauer V_{D} der gasfreien Faserstoffsuspension 2.2 in ihm zwischen 2 und 60 Sekunden, vorzugsweise zwischen 5 und 20 Sekunden, ist und daß das Verweilvolumen V_{V} der gasfreien Faserstoffsuspension 2.2 in ihm zwischen 0,8 und 100 m³, vorzugsweise zwischen 4 und 70 m³, ist. Dem hydraulischen Stabilisator 23 nachgeordnet ist eine nicht dargestellte Pumpe, die die gasfreie Faserstoffsuspension 2.2 dem nicht dargestellten Stoffauflauf einer Papier- oder Kartonmaschine unter Druck zuführt. Zwischen dem hydraulischen Stabilisator 23 und der nicht dargestellten Pumpe kann zur Verbesserung der Qualität der gasfreien Faserstoffsuspension 2.2 noch ein Sichter, insbesondere ein Vertikalsichter, angeordnet sein.
Erfindungsgemäß ist die Vorrichtung 1 nun dadurch gekennzeichnet, daß dem Behälter 3 (Hauptbehälter) in Richtung seiner Behälterachse 3a mindestens ein weiterer Behälter 3.1 (Nebenbehälter) nachgeordnet ist, der im wesentlichen wie der Hauptbehälter 3 ausgebildet ist. In der vorliegenden Figur 1 sind dem Hauptbehälter 3 insgesamt drei Nebenbehälter 31., 3.2 und 3.3 formschlüssig nachgeordnet, die mittels Vakuumdurchlässe 28 miteinander verbunden sind und durch den bereits für den Hauptbehälter 3 beschriebenen Unterdruckanschluß 9 über die Unterdruckleitung 10 an die Unterdruckpumpe 11 mit der weiterführenden, nicht vollständig dargestellten Leitung 12 angeschlossen ist. Es ist selbstverständlich auch möglich, daß jeder Behälter sein eigenes Unterdrucksystem aufweist oder daß mehrere Behälter ein gemeinsames Unterdrucksystem aufweisen, wobei diese Behälter dann mittels Vakuumdurchlässe 28 miteinander verbunden sind.

Der in Figur 1 rechts neben dem Hauptbehälter 3 angeordnete erste Nebenbehälter 3.1 weist einen spiegelbildlichen Aufbau zu einer vertikalen, durch den Mittelpunkt M des Nebenbehälters 3.1 gehenden Ebene E auf. In schematischer Weise ist dargestellt, daß dem ersten Nebenbehälter 3.1 die Faserstoffsuspension 2 als dünnes Gemisch über mindestens ein zu der Behälterachse 3a paralleles Verteilrohr 4, von dem eine Mehrzahl von aufeinanderfolgenden, nur schematisch dargestellten Strahlrohren 5 zum Einführen von Faserstoffsuspension 2 in den Nebenbehälter 3.1 ausgehen, zugeführt wird. Die Zuführung der Faserstoffsuspension 2 in das Verteilrohr 4 erfolgt über eine angedeutete Zufuhrleitung mittig von oben. Es ist platt selbstverständlich, daß die Zuführung der Faserstoffsuspension 2 in das Verteilrohr 4 auch seitlich oder von unten erfolgen kann. Der erste Nebenbehälter 3.1 weist zudem zwei Haupttrennwände 16.1 und 16.2 und zwei Nebentrennwände 21.1 und 21.2 auf, die in bekannter Weise angeordnet sind. Die gasfreien Faserstoffsuspensionen 2.2 werden über je einen Austrittsstutzen 20.1 und 20.2, die überschüssigen Faserstoffsuspensionen 2.1 über einen gemeinsamen Austrittsstutzen 18 abgeführt.

Der in Figur 1 an zweiter Stelle rechts neben dem Hauptbehälter 3 angeordnete zweite Nebenbehälter 3.2 weist im unteren Bereich einen spiegelbildlichen Aufbau zu einer vertikalen, durch den Mittelpunkt M des Nebenbehälters 3.2 gehenden Ebene E auf. Der zweite Nebenbehälter 3.2 weist zwei Haupttrennwände 16.1 und 16.2 und zwei Nebentrennwände 21.1 und 21.2 auf, die in bekannter Weise angeordnet sind. Die gasfreien Faserstoffsuspensionen 2.2 werden über je einen Austrittsstutzen 20.1 und 20.2, die überschüssigen Faserstoffsuspensionen 2.1 über einen gemeinsamen Austrittsstutzen 18 abgeführt. Es ist jedoch auch möglich, daß die überschüssige Faserstoffsuspension 2.1 je nach Ort des Entstehens mittels eines separaten Austrittsstutzens 18 abgeführt wird. Weiterhin ist in schematischer Weise dargestellt, daß dem linken Teil des zweiten Nebenbehälters 3.2 die Faserstoffsuspension 2 als dünnes Gemisch über ein zu der Behälterachse 3a paralleles Verteilrohr 4, von dem eine Mehrzahl von aufeinanderfolgenden, nur schematisch dargestellten Strahlrohren 5 zum Einführen von Faserstoffsuspension 2 in den Nebenbehälter 3.2 ausgehen, zugeführt wird. Die Zuführung der Faserstoffsuspension 2 in das Verteilrohr 4 erfolgt über eine angedeutete Zufuhrleitung von oben. Es ist platt selbstverständlich, daß die Zuführung der Faserstoffsuspension 2 in das Verteilrohr 4 auch seitlich oder von unten erfolgen kann. Dem rechten Teil des zweiten Nebenbehälters 3.2 werden zwei, vorzugsweise verschiedene Faserstoffsuspensionen 2a und 2b über zwei mit dem Nebenbehälter 3.2 kommunizierende und ihm Faserstoffsuspension(en) 2 zuführende Kammern 25 zugeführt, wobei nur zwei Kammern 25.1 und 25.2 schematisch durch Kreise angedeutet sind. Die zugeführten Faserstoffsuspensionen 2 können sich in ihrer Zusammensetzung und Beschaffenheit unterscheiden, wodurch wiederum die bereits genannten Synergieeffekte durch die erfindungsgemäße Vorrichtung entstehen. Die kommunizierenden Kammern 25 liegen oberhalb des Flüssigkeitsstands 6 der zugeführten Faserstoffsuspension 2 im zweiten Nebenbehälter 3.2. Der Nebenbehälter 3.2 samt Bauteile und -gruppen der dargestellten Vorrichtung 1 ist dem Fachmann der Branche als "Flying Wing DECULATOR®" der Firma Ahlstrom Machinery Corporation bekannt, der auch in der US-Patentschrift US 3,538,680 (≈ DE-A 17 61 496) offenbart ist. Der zweite Nebenbehälter 3.2 weist ferner zwischen den Zuführsystemen für die Faserstoffsuspensionen 2 eine vertikale Trennwand 26 auf, um damit ein etwaiges Mischen der Faserstoffsuspensionen während ihrer Zuführung in den Nebenbehälter 3.2 zu verhindern.
Der in Figur 1 an dritter Stelle rechts neben dem Hauptbehälter 3 angeordnete dritte Nebenbehälter 3.3 weist einen Aufbau auf, wie er aus der US-Patentschrift 5,868,905 (PA10542 US) bekannt ist. Dieser dritte Nebenbehälter 3.3 ist spiegelbildlich zum Hauptbehälter 3, auf dessen Beschreibung verwiesen wird, aufgebaut. Der einzige Unterschied besteht lediglich in der Zuführung der Faserstoffsuspension 2. Sie wird als dünnes Gemisch über ein zu der Behälterachse 3a paralleles Verteilrohr 4, von dem eine Mehrzahl von aufeinanderfolgenden, nur schematisch dargestellten Strahlrohren 5 zum Einführen von Faserstoffsuspension 2 in den Nebenbehälter 3.3 ausgehen, zugeführt. Die Zuführung der Faserstoffsuspension 2 in das Verteilrohr 4 erfolgt über eine angedeutete Zufuhrleitung von rechts. In dem Verteilrohr 4 abgewandten Teil des Nebenbehälters 3.3 ist eine einen Überlauf 15 bildende Haupttrennwand 16 mit einer Oberkante 17 und mit einer Stauhöhe H_{SH} angebracht. Der Haupttrennwand 16 nachgeordnet ist -in Strömungsrichtung der Faserstoffsuspension 2 gesehen- ein Austrittsstutzen 18. Dem Austrittsstutzen 18 ist ein anfänglich dargestelltes Leitungssystem 19 zum Zurückführen der in den Nebenbehälter 3.3 eingetretenem überschüssigen, mit leichten Verunreinigungen versetzten Faserstoffsuspension 2.1 zurück in den nicht dargestellten, dem Fachmann jedoch bekannten Kreislauf angeschlossen. Der Haupttrennwand 16 vorgeordnet ist -in Strömungsrichtung der Faserstoffsuspension gesehen- ein Austrittsstutzen 20 für gasfreie Faserstoffsuspension 2.2, wobei dem Austrittsstutzen 20 -in Strömungsrichtung der Faserstoffsuspension gesehen- eine Nebentrennwand 21 mit einer Oberkante 22 und mit einer Stauhöhe N_{SH} vorgeordnet ist. Hinsichtlich der Anordnung der Austrittsstutzen 18 und 20 samt ihrer nicht näher bezeichneten Vorderkanten und Hinterkante und der Trennwände gelten die in der nicht vorveröffenttichten deutschen Patentanmeldung DE 199 46 575 der Anmelderin gemachten Ausführungen.

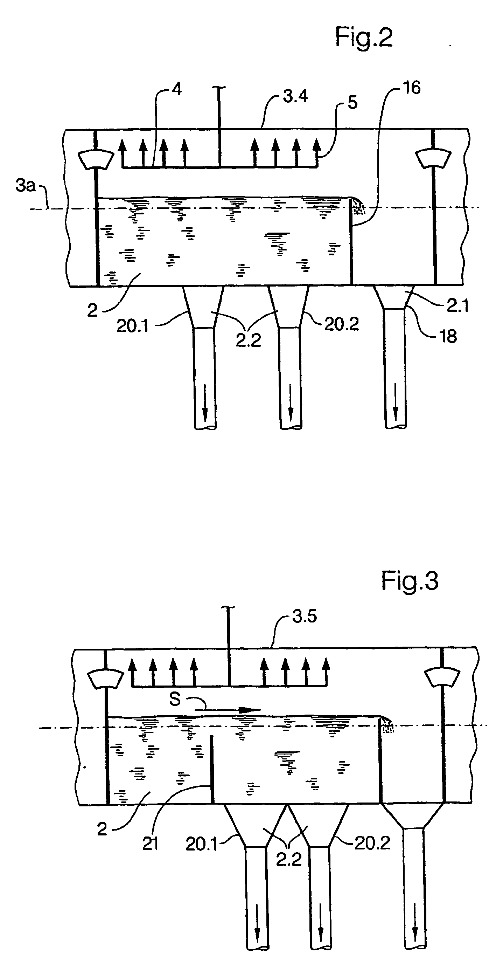

Die Figur 2 zeigt in schematisierte und geschnittene Seitenansicht eines weiteren erfindungsgemäßen Nebenbehälters 3.4. In schematischer Weise ist dargestellt, daß diesem Nebenbehälter 3.4 die Faserstoffsuspension 2 als dünnes Gemisch über mindestens ein zu der Behälterachse 3a paralleles Verteilrohr 4, von dem eine Mehrzahl von aufeinanderfolgenden, nur schematisch dargestellten Strahlrohren 5 zum Einführen von Faserstoffsuspension 2 in den Nebenbehälter 3.4 ausgehen, zugeführt wird. Die Zuführung der Faserstoffsuspension 2 in das Verteilrohr 4 erfolgt über eine angedeutete Zufuhrleitung mittig von oben. Es ist platt selbstverständlich, daß die Zuführung der Faserstoffsuspension 2 in das Verteilrohr 4 auch seitlich oder von unten erfolgen kann. Der Nebenbehälter 3.4 weist zudem nur eine Haupttrennwand 16 auf, die in bekannter Weise angeordnet ist. Die gasfreie Faserstoffsuspension 2.2 wird über zwei nebeneinander liegende Austrittsstutzen 20.1 und 20.2, die überschüssige Faserstoffsuspension 2.1 über einen Austrittsstutzen 18 abgeführt.
Weiterhin zeigt die Figur 3 einen weiteren erfindungsgemäßen Nebenbehälter 3.5 in schematisierter und geschnittener Seitenansicht, ähnlich dem der Figur 2. Der primäre Unterschied besteht darin, daß den beiden nebeneinander liegenden Austrittsstutzen 20.1 und 20.2 zur Abführung der gasfreien Faserstoffsuspension 2.2 noch eine Nebentrennwand 21 in Strömungsrichtung S der Faserstoffsuspension 2 vorgeordnet ist. Im übrigen entsprecht der Aufbau des Nebenbehälters 3.5 der Figur 3 dem der Figur 2.

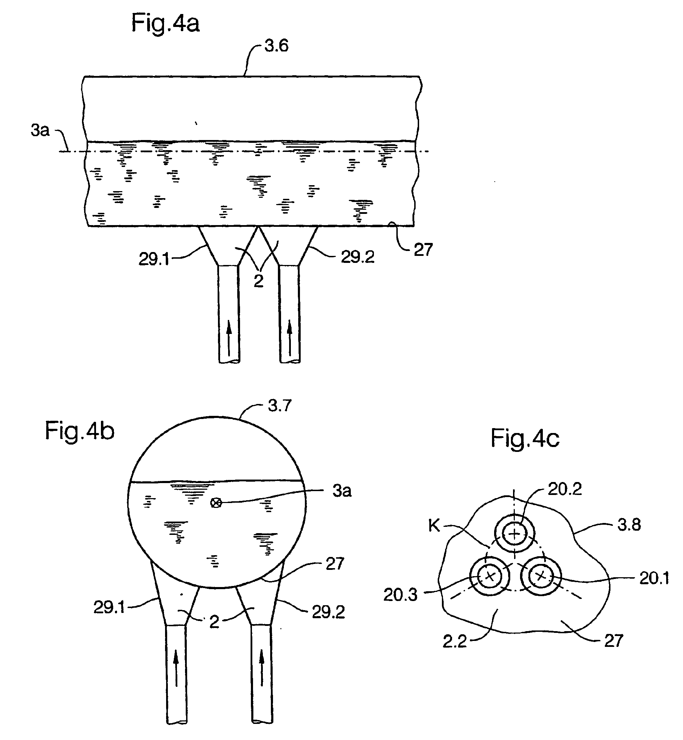

Die Figur 4a zeigt eine sehr schematisierte und geschnittene Seitenansicht eines erfindungsgemäßen Nebenbehälters 3.6. Es ist klar erkennbar, daß erfindungsgemäß zwei Eintrittsstutzen 29.1 und 29.2 zur Zuführung der Faserstoffsuspension 2, vorzugsweise in Richtung der Behälterachse 3a, unmittelbar nebeneinander im Behälter 3.6, vorzugsweise im Behälterboden 27, angebracht sind. Gemäß dem schematisierten Schnitt quer zur Richtung der Behälterachse der Figur 4b sind zwei Eintrittsstutzen 29.1 und 29.2 zur Zuführung der Faserstoffsuspension 2, vorzugsweise quer zur Richtung der Behälterachse 3a, unmittelbar nebeneinander im Behälter 3.7, vorzugsweise im Behälterboden 27, angebracht. Und die Figur 4c zeigt eine schematisierte Draufsicht auf den Behälterboden 27, in dem erfindungsgemäß drei Austrittsstutzen 20.1, 20.2 und 20.3 zur Abführung der gasfreien Faserstoffsuspension 2.2 auf einem Teilkreis K, vorzugsweise gleichmäßig, im Behälter 3.8, vorzugsweise im Behälterboden 27, angebracht sind.

Es versteht sich von selbst, daß sowohl dem mindestens einen Austrittsstutzen 20 für gasfreien Fasersuspension 2.2 des Hauptbehälters 3 als auch der nachgeordneten Nebenbehälter 3.1-3.8 je ein hydraulischer Stabilisator 23 mit den genannten Eigenschaften nachgeordnet sein kann.

Zusammenfassend ist festzuhalten, daß durch die Erfindung eine Vorrichtung der eingangs genannten Art geschaffen wird, mit welcher gleichzeitig mehrere Faserstoffsuspensionen unterschiedlicher Zusammensetzung und Beschaffenheit unabhängig voneinander entgast und bei Bedarf zusammengeführt werden können und dabei der für die Vorrichtung benötigte Raumbedarf bei Beibehaltung der qualitativen und funktionellen Eigenschaften der Faserstoffsuspension und bei Erhöhung der Runnability der Papier- oder Kartonmaschine reduziert wird.

### Bezugszeichenliste

- 1: Vorrichtung (zum Entgasen von Faserstoffsuspensionen)
- 2: Faserstoffsuspension
- 2a, 2b: Faserstoffsuspension
- 2.1: Überschüssige Faserstoffsuspension
- 2.2: Gasfreie Faserstoffsuspension
- 3: Hauptbehälter
- 3a: Behälterachse
- 3.1-3.8: Nebenbehälter
- 4: Verteilrohr
- 5: Strahlrohr
- 6: Flüssigkeitsstand
- 7: Gas
- 8: Behälterdecke
- 9: Unterdruckanschluß
- 10: Unterdruckleitung
- 11: Unterdruckpumpe
- 12: Leitung
- 13: Düse
- 14: Behälterinnenoberfläche
- 15: Überlauf
- 16, 16.1, 16.2: Haupttrennwand
- 17: Oberkante
- 18: Austrittsstutzen
- 19: Leitungssystem
- 20, 20.1-20.3: Austrittsstutzen
- 21, 21.1, 21.2: Nebentrennwand
- 22: Oberkante
- 23: Hydraulischer Stabilisator
- 24: Konisches Rohr
- 25, 25.1, 25.2: Kammer
- 26: Trennwand
- 27: Behälterboden
- 28: Vakuumdurchlaß
- 29: Eintrittsstutzen

- E: Ebene
- H_{SH}: Stauhöhe
- K: Teilkreis
- M: Mittelpunkt
- N_{SH}: Stauhöhe
- S: Strömungsrichtung
- V_{D}: Verweildauer
- V_{V}: Verweilvolumen

## Patentansprüche

1. Vorrichtung (1) zum Entgasen von Faserstoffsuspensionen (2, 2a, 2b) bestehend aus
- einem, vorzugsweise langgestreckten und liegenden zylindrischen, Hauptbehälter (3) mit einer horizontalen oder annähernd horizontalen Behälterachse (3a);
- mindestens einer darin angeordneten, einen Überlauf (15) bildenden Trennwand (16);
- mindestens je einem im Haupbehälter (3) angebrachten Stutzen (4, 9, 18, 20) für mindestens eine Faserstoffsuspension (2), für mindestens eine gasfreie Faserstoffsuspension (2.2), für ein abgeschiedenes Gas (7) und für mindestens eine mittels des mindestens einen Überlaufs (15) abgeschiedene, überschüssige Faserstoffsuspension (2.1);
- Mitteln zum Erzeugen eines Unterdrucks im Hauptbehälter (3);
wobei dem Hauptbehälter (3) in Richtung seiner Behälterachse (3a) mindestens ein weiterer Nebenbehälter (3.1-3.8) nachgeordnet ist, der vorzugsweise im wesentlichen wie der Hauptbehälter (3) ausgebildet ist,
indem er mit jeweils
- mindestens einer darin angeordneten, einen Überlauf bildenden Trennwand (16, 16.1, 16.2);
- mindestens je einem im Nebenbehälter angebrachten Stutzen (4, 18, 20, 20.1, 20.2, 20.3, 25.1, 25.2) für mindestens eine zu entgasende Faserstoffsuspension für mindestens eine gasfreie Faserstoffsuspension und für mindestens eine mittels des mindestens einen Überlaufes abgeschiedene überschüssige Faserstoffsuspension
und
- Mittel zum Erzeugen eines Unterdrucks im Nebenbehälter
aufweist.,
**dadurch gekennzeichnet,**
**daß** dem Hauptbehälter (3) in Richtung seiner Behälterachse (3a) insgesamt mindestens drei Nebenbehälter (3.1 - 3.8) nachgeordnet sind mit jeweils
- mindestens einer darin angeordneten, einen Überlauf bildende Trennwand (16, 16.1, 16.2);
- mindestens je einem im Nebenbehälter angebrachten Stutzen (4, 18, 20, 20.1, 20.2, 20.3, 25, 25.1, 25.2) für mindestens eine zu entgasende Faserstoffsuspension, für mindestens eine gasfreie Faserstoffsuspension und für mindestens eine mittels des mindestens einen Überlaufs abgeschiedene, überschüssige Faserstoffsuspension; und
- Mitteln zur Erzeugung eines Unterdrucks im Nebenbehälter.

2. Vorrichtung (1) nach Anspruch 1,
**dadurch gekennzeichnet,**
**daß** der dem Hauptbehälter (3) in Richtung seiner Behälterachse (3a)nachgeordnet weitere Nebenbehälter (3.1-3.8) formschlüssig nachgeordnet ist.

3. Vorrichtung (1) nach Anspruch 1 oder 2,
**dadurch gekennzeichnet,**
**daß** der in einem Behälter (3, 3.1-3.8) angebrachte Stutzen für die Faserstoffsuspension (2, 2a, 2b) mindestens ein zu der Behälterachse (3a) paralleles oder annähernd paralleles Verteilungsrohr (4) umfaßt, von dem eine Mehrzahl von aufeinanderfolgenden Strahlrohren (5) zum Einführen der Faserstoffsuspension (2, 2a, 2b) in den Behälter (3, 3.1-3.8) ausgehen.

4. Vorrichtung (1) nach Anspruch 3,
**dadurch gekennzeichnet,**
**daß** die Zuführung der Faserstoffsuspension (2, 2a, 2b) zum Verteilungsrohr (4) seitlich, von oben, vorzugsweise mittig, oder von unten erfolgt.

5. Vorrichtung (1) nach Anspruch 1 oder 2,
**dadurch gekennzeichnet,**
**daß** der in einem Behälter (3, 3.1-3.8) angebrachte Stutzen für die Faserstoffsuspension (2, 2a, 2b) mindestens eine mit dem Behälter (3, 3.1-3.8) kommunizierende und ihr Faserstoffsuspension (2, 2a, 2b) zuführende Kammer (25, 25.1-25,2) umfaßt, wobei die kommunizierende Kammer (25, 25.1-25,2) oberhalb dem Flüssigkeitsstand (6) der zugeführten Faserstoffsuspension (2, 2a, 2b) im Behälter (3, 3.1-3.8) liegt.

6. Vorrichtung (1) nach einem der vorhergehenden Ansprüche 3 bis 5,
**dadurch gekennzeichnet,**
**daß** zwei oder mehrere Stutzen für je eine Faserstoffsuspension (2, 2a, 2b) in einem Behälter (3; 3.1-3.8) angebracht sind, wobei die Faserstoffsuspensionen (2, 2a, 2b) sich in ihrer Zusammensetzung und Beschaffenheit unterscheiden.

7. Vorrichtung (1) nach einem der vorhergehenden Ansprüche,
**dadurch gekennzeichnet,**
**daß** zwei Stutzen (20.1, 20.2) für gasfreie Faserstoffsuspension (2.2) in einem Behälter (3, 3.1-3.8), vorzugsweise im Behälterboden (27), angebracht sind.

8. Vorrichtung (1) nach Anspruch 7,
**dadurch gekennzeichnet,**
**daß** die zwei Stutzen (20.1, 20.2) für gasfreie Faserstoffsuspension (2.2), vorzugsweise in Richtung der Behälterachse (3a) oder quer zur Richtung der Behälterachse (3a), unmittelbar nebeneinander im Behälter (3, 3.1-3.8), vorzugsweise im Behälterboden (27), angebracht sind.

9. Vorrichtung (1) nach einem der vorhergehenden Ansprüche 1 bis 6,
**dadurch gekennzeichnet,**
**daß** mindestens drei Stutzen (20.1-20.3) für gasfreie Faserstoffsuspension (2.2) in einem Behälter (3, 3.1-3.8), vorzugsweise im Behälterboden (27), angebracht sind.

10. Vorrichtung (1) nach Anspruch 9,
**dadurch gekennzeichnet,**
**daß** die mindestens drei Stutzen (20.1-20.3) für gasfreie Faserstoffsuspension (2.2) auf einem Teilkreis (K), vorzugsweise gleichmäßig, im Behälter (3, 3.1-3.8), vorzugsweise im Behälterboden (27), angebracht sind.

11. Vorrichtung (1) nach einem der vorhergehenden Ansprüche,
**dadurch gekennzeichnet,**
**daß** in einem Behälter (3, 3.1-3.8) mindestens eine weitere Trennwand (21, 21.1, 21.2) zur Abscheidung der gasfreien Faserstoffsuspension (2.2) angeordnet ist.

12. Vorrichtung (1) nach einem der vorhergehenden Ansprüche,
**dadurch gekennzeichnet,**
**daß** die in einem Behälter (3, 3.1-3.8) eingebauten Trennwände (16, 16.1, 16.2, 21, 21.1, 21.2) zu einer vertikalen Ebene E, vorzugsweise durch den Mittelpunkt M des Behälters (3, 3.1-3.8) gehend, spiegelbildlich angeordnet sind, wobei mindestens eine Trennwand (16, 16.1, 16.2) zur Abscheidung der überschüssigen Faserstoffsuspension (2.1) und mindestens eine Trennwand (21, 21.1, 21.2) zur Abscheidung der gasfreien Faserstoffsuspension (2.2) dient.

13. Vorrichtung (1) nach einem der vorhergehenden Ansprüche,
**dadurch gekennzeichnet,**
**daß** dem mindestens einen in einem Behälter (3, 3.1-3.8), vorzugsweise im Behälterboden (27), angebrachten Stutzen (20, 20.1, 20.2) für mindestens eine gasfreie Faserstoffsuspension (2.2) mindestens ein hydraulischer Stabilisator (23) nachgeschaltet ist.

14. Vorrichtung (1) nach Anspruch 13,
**dadurch gekennzeichnet,**
**daß** der hydraulische Stabilisator (23) für die gasfreie Faserstoffsuspension (2.2) ein Verweilbehälter mit einer bestimmten Verweildauer (V_{D}) und mit einem bestimmten Verweilvolumen (V_{V}) ist und eine strömungstechnisch optimale Innenkontur aufweist.

15. Vorrichtung (1) nach Anspruch 14,
**dadurch gekennzeichnet,**
**daß** die strömungstechnisch optimale Innenkontur die Kontur eines langgestreckten und liegenden Zylinders oder eines in Strömungsrichtung der gasfreien Faserstoffsuspension (2.2) ausgerichteten konischen Rohrs (24) ist.

16. Vorrichtung (1) nach einem der vorhergehenden Ansprüche 14 bis 16,
**dadurch gekennzeichnet,**
**daß** die Verweildauer (V_{D}) der gasfreien Faserstoffsuspension (2.2) im hydraulischen Stabilisator (23) zwischen 2 und 60 Sekunden, vorzugsweise zwischen 4 und 25 Sekunden, ist.

17. Vorrichtung (1) nach einem der vorhergehenden Ansprüche 13 bis 16,
**dadurch gekennzeichnet,**
**daß** das Verweilvolumen (V_{V}) der gasfreien Faserstoffsuspension (2.2) im hydraulischen Stabilisator (23) zwischen 0,8 und 100 m³, vorzugsweise zwischen 4 und 70 m³, ist.

18. Vorrichtung (1) nach einem der vorhergehenden Ansprüche,
**dadurch gekennzeichnet,**
**daß** die Mittel zum Erzeugen des Unterdrucks in einem Behälter (3, 3.1-3.8) je ein Unterdruckanschluß (9), je eine Unterdruckleitung (10) und mindestens eine Unterdruckpumpe (11) mit Leitung (12) sind.

19. Vorrichtung (1) nach einem der vorhergehenden Ansprüche 1 bis 15,
**dadurch gekennzeichnet,**
**daß** die Mittel zum Erzeugen des Unterdrucks in mindestens zwei nebeneinander angebrachten Behältern (3, 3.1-3.8) eine Unterdruckleitung (10) und mindestens eine Unterdruckpumpe (11) mit Leitung (12) sind, wobei die Behälter (3, 3.1-3.8) durch einen Vakuumdurchlaß (28) miteinander verbundenen sind und nur ein Behälter (3, 3.1-3.8) einen mit der Unterdruckleitung (10) verbundenen Unterdruckanschluß (9) aufweist.

20. Vorrichtung (1) nach einem der vorhergehenden Ansprüche,
**dadurch gekennzeichnet,**
**daß** im oberen Innenbereich eines Behälters (3, 3.1-3.8) mehrere Düsen (13) zur Anfeuchtung der nicht mit der Faserstoffsuspension (2, 2a, 2b) berührten Behälterinnenoberfläche (14) angebracht sind.

## Claims

1. A device (1) for degassing pulp suspensions (2, 2a, 2b), consisting of
- a preferably elongate, horizontal cylindrical main tank (3) with a horizontal or approximately horizontal axis (3a);
- at least one partition (16) located therein which forms an overflow means (15);
- at least one connection pipe (4, 9, 18, 20) in each case connected in the main tank (3) for at least one pulp suspension (2), for at least one gas-free pulp suspension (2.2), for a gas (7) which has been separated off and for at least one excess pulp suspension (2.1) separated off by means of the at least one overflow means (15);
- means for generating a partial vacuum in the main tank (3);
the main tank (3) being succeeded in the direction of its axis (3a) by at least one further subsidiary tank (3.1-3.8), which is preferably designed substantially like the main tank (3),
in that it comprises in each case
- at least one partition (16, 16.1, 16.2) located therein which forms an overflow means;
- at least one connection pipe (4, 18, 20, 20.1, 20.2, 20.3, 25, 25.1, 25.2) in each case connected in the subsidiary tank for at least one pulp suspension which is to be degassed, for at least one gas-free pulp suspension and for at least one excess pulp suspension separated off by means of the at least one overflow means; and
- means for generating a partial vacuum in the subsidiary tank,
**characterised in that**
a total of at least three subsidiary tanks (3.1-3.8) succeed the main tank (3) in the direction of its axis (3a)
with in each case
- at least one partition (16, 16.1, 16.2) located therein which forms an overflow means;
- at least one connection pipe (4, 18, 20, 20.1, 20.2, 20.3, 25, 25.1, 25.2) in each case connected in the subsidiary tank for at least one pulp suspension which is to be degassed, for at least one gas-free pulp suspension and for at least one excess pulp suspension separated off by means of the at least one overflow means; and
- means for generating a partial vacuum in the subsidiary tank.

2. A device (1) according to Claim 1,
**characterised in that**
the further subsidiary tank (3.1-3.8) succeeding the main tank (3) in the direction of its axis (3a) succeeds it in form-fitting manner.

3. A device (1) according to Claim 1 or 2,
**characterised in that**
the connection pipe for the pulp suspension (2, 2a, 2b) which is connected in a tank (3, 3.1-3.8) comprises at least one distribution pipe (4) parallel or approximately parallel to the tank axis (3a), from which pipe a plurality of successive nozzle pipes (5) for introducing the pulp suspension (2, 2a, 2b) into the tank (3, 3.1-3.8) emerge.

4. A device (1) according to Claim 3,
**characterised in that**
the pulp suspension (2, 2a, 2b) is supplied to the distribution pipe (4) laterally, from above, preferably centrally, or from below.

5. A device (1) according to Claim 1 or 2,
**characterised in that**
the connection pipe for the pulp suspension (2, 2a, 2b) connected in a tank (3, 3.1-3.8) comprises at least one chamber (25, 25.1-25.2) which communicates with the tank (3, 3.1-3.8) and supplies pulp suspension (2, 2a, 2b) thereto, the communicating chamber (25, 25.1-25.2) being located above the liquid level (6) of the supplied pulp suspension (2, 2a, 2b) in the tank (3, 3.1-3.8).

6. A device (1) according to one of the preceding Claims 3 to 5,
**characterised in that**
two or more connection pipes for one pulp suspension (2, 2a, 2b) in each case are connected in a tank (3, 3.1-3.8), the pulp suspensions (2, 2a, 2b) differing in their composition and nature.

7. A device (1) according to one of the preceding claims,
**characterised in that**
two connection pipes (20.1, 20.2) for gas-free pulp suspension (2.2) are connected in a tank (3, 3.1-3.8), preferably in the bottom (27) of the tank.

8. A device (1) according to Claim 7,
**characterised in that**
the two connection pipes (20.1, 20.2) for gas-free pulp suspension (2.2), are connected immediately next to one another in the tank (3, 3.1-3.8), preferably in the bottom (27) of the tank, and preferably in the direction of the tank axis (3a) or transversely to the direction of the tank axis (3a).

9. A device (1) according to one of the preceding Claims 1 to 6,
**characterised in that**
at least three connection pipes (20.1- 20.3) for gas-free pulp suspension (2.2) are connected in a tank (3, 3.1-3.8), preferably in the bottom (27) of the tank.

10. A device (1) according to Claim 9,
**characterised in that**
the at least three connection pipes (20.1 - 20.3) for gas-free pulp suspension (2.2) are connected on a divided circle (K), preferably regularly, in the tank (3, 3.1-3.8), preferably in the bottom (27) of the tank.

11. A device (1) according to one of the preceding claims,
**characterised in that**
at least one further partition (21, 21.1, 21.2) is arranged in a tank (3, 3.1-3.8) for separating off the gas-free pulp suspension (2.2).

12. A device (1) according to one of the preceding claims,
**characterised in that**
the partitions (16, 16.1, 16.2, 21, 21.1, 21.2) built into a tank (3, 3.1-3.8) are arranged mirror-invertedly to a vertical plane E, preferably passing through the central point M of the tank (3, 3.1-3.8), at least one partition (16, 16.1, 16.2) serving to separate off the excess pulp suspension (2.1) and at least one partition (21, 21.1, 21.2) serving to separate off the gas-free pulp suspension (2.2).

13. A device (1) according to one of the preceding claims,
**characterised in that**
the at least one connection pipe (20, 20.1, 20.2) connected in a tank (3, 3.1-3.8), preferably in the bottom (27) of the tank, for at least one gas-free pulp suspension (2.2) is succeeded by at least one hydraulic stabiliser (23).

14. A device (1) according to Claim 13,
**characterised in that**
the hydraulic stabiliser (23) for the gas-free pulp suspension (2.2) is a detention tank with a given detention time (V_{D}) and with a given detention volume (V_{V}) and has an internal contour which is optimum in terms of flow.

15. A device (1) according to Claim 14,
**characterised in that**
the internal contour which is optimum in terms of flow is the contour of an elongate, horizontal cylinder or of a conical pipe (24) oriented in the direction of flow of the gas-free pulp suspension (2.2).

16. A device (1) according to one of the preceding Claims 14 to 16 [sic],
**characterised in that**
the detention time (V_{D}) of the gas-free pulp suspension (2.2) in the hydraulic stabiliser (23) is between 2 and 60 seconds, preferably between 4 and 25 seconds.

17. A device (1) according to one of the preceding Claims 13 to 16,
**characterised in that**
the detention volume (V_{V}) of the gas-free pulp suspension (2.2) in the hydraulic stabiliser (23) is between 0.8 and 100 m³, preferably between 4 and 70 m³.

18. A device (1) according to one of the preceding claims,
**characterised in that**
the means for generating the partial vacuum in a tank (3, 3.1-3.8) are in each case a vacuum connection (9), a vacuum line (10) and at least one vacuum pump (11) with line (12).

19. A device (1) according to one of the preceding Claims 1 to 15,
**characterised in that**
the means for generating the partial vacuum in at least two tanks (3, 3.1-3.8) connected next to one another are a vacuum line (10) and at least one vacuum pump (11) with line (12), the tanks (3, 3.1-3.8) being connected together by a vacuum passage (28) and only one tank (3, 3.1-3.8) having a vacuum connection (9) connected to the vacuum line (10).

20. A device (1) according to one of the preceding claims,
**characterised in that**
a plurality of nozzles (13) for moistening the inner surface (14) of a tank which is not in contact with the pulp suspension (2, 2a, 2b) are connected in the upper inner region of a tank (3, 3.1-3.8).

## Revendications

1. Dispositif (1) destiné au dégazage de suspensions (2, 2a, 2b) de matières fibreuses, constitué de
- un récipient principal (3) cylindrique, de préférence oblong et allongé, avec un axe de récipient (3a) horizontal ou approximativement horizontal ;
- au moine une cloison de séparation (16) disposée dans celui-ci, formant un trop-plein (15) ;
- au moins une tubulure (4, 9, 18, 20) prévue dans le récipient principal (3) pour au moins une suspension (2) de matières fibreuses, pour au moins une suspension dégazée (2.2) de matières fibreuses, pour un gaz (7) extrait, et pour au moins une suspension excédentaire (2.1) de matières fibreuses évacuée au moyen de l'au moins un trop-plein (15) ;
- des moyens pour générer une dépression dans le récipient principal (3) ;
au moins un autre récipient auxiliaire (3.1 à 3.8) étant disposé en aval du récipient principal (3) en direction de son axe de récipient (3a), qui est de préférence agencé sensiblement comme le récipient principal (3),
car il comporte
- au moins une cloison de séparation (16, 16-1, 16.2) disposée dans celui-ci, formant un trop-plein ;
- au moins une tubulure (4, 18, 20, 20.1, 20.2, 20.3, 25, 25.1, 25.2) prévue dans le récipient auxiliaire pour au moins une suspension de matières fibreuses à dégazer, pour au moins une suspension dégazée de matières fibreuses, et pour au moins une suspension excédentaire de matières fibreuses évacuée au moyen de l'au moins un trop-plein
et
- des moyens pour générer une dépression dans le récipient auxiliaire,
**caractérisé en ce que**
un total d'au moins trois récipients auxiliaires (3.1 à 3.8) est disposé en aval du récipient principal (3) en direction de son axe de récipient (3a), comportant chacun
- au moins une cloison de séparation (16, 16.1, 16.2) disposée dans celui-ci, formant un trop-plein ;
- au moins une tubulure (4, 18, 20, 20.1, 20.2, 20.3, 25, 25.1, 25.2) prévue dans le récipient auxiliaire pour au moins une suspension de matières fibreuses à dégazer, pour au moins une suspension dégazée de matières fibreuses, et pour au moins une suspension excédentaire de matières fibreuses évacuée au moyen de l'au moins un trop-plein ; et
- des moyens pour générer une dépression dans le récipient auxiliaire.

2. Dispositif (1) selon la revendication 1,
**caractérisé en ce que**
l'autre récipient auxiliaire (3.1 à 3.8) disposé en aval du récipient principal (3) en direction de son axe de récipient (3a), est disposé en aval par complémentarité de formes.

3. Dispositif (1) selon la revendication 1 ou 2,
**caractérisé en ce que**
la tubulure prévue dans un récipient (3, 3.1 à 3.8) pour la suspension (2, 2a, 2b) de matières fibreuses, comporte au moins un tube de distribution (4) parallèle ou approximativement parallèle à l'axe de récipient (3a), duquel part une pluralité de tubes d'éjection (5) successifs pour l'introduction de la suspension (2, 2a, 2b) de matières fibreuses dans le récipient (3, 3.1 à 3.8).

4. Dispositif (1) selon la revendication 3,
**caractérisé en ce que**
l'amenée de la suspension (2, 2a, 2b) de matières fibreuses au tube de distribution (4) est effectuée latéralement à partir du haut du du bas, de préférence de façon centrale.

5. Dispositif (1) selon la revendication 1 ou 2,
**caractérisé en ce que**
la tubulure prévue dans un récipient (3, 3.1 à 3. 8) pour la suspension (2, 2a, 2b) de matières fibreuses, comporte au moins une chambre (25, 25.1 - 25.2) communiquant avec le récipient; (3, 3.1 à 3.8) et lui amenant de la suspension (2, 2a, 2b) de matières fibreuses, la chambre (25, 25.1 - 25.2) communicante étant située dans le récipient (3, 3.1 à 3. 8) au-dessus du niveau de liquide (6) de la suspension (2, 2a, 2b) de matières fibreuses amenée.

6. Dispositif (1) selon l'une des revendications précédentes 3 à 5,
**caractérisé en ce que**
deux ou plusieurs tubulures pour une suspension respective (2, 2a, 2b) de matières fibreuses sont prévues dans un récipient (3, 3.1 à 3.8) les suspensions (2, 2a, 2b) de matières fibreuses se distinguant dans leur composition et leur nature.

7. Dispositif (1) selon, l'une des revendications précédentes,
**caractérisé en ce que**
deux tubulures (20.1, 20.2) pour de la suspension dégazée (2.2) de matières fibreuses sont prévues dans un récipient (3, 3.1 à 3.8), de préférence dans le fond (27) de récipient.

8. Dispositif (1) selon la revendication 7,
**caractérisé en ce que**
les deux tubulures (20.1, 20.2) pour de la suspension dégazée (2.2) de matières fibreuses sont de préférence prévues, en direction de l'axe de récipient (3a) ou transversalement à la direction de l'axe de récipient (3a), directement l'une à côté de l'autre dans le récipient (3, 3.1 à 3.8), de préférence dans le fond (27) de récipient.

9. Dispositif (1) selon l'une des revendications précédentes 1 à 6,
**caractérisé en ce que**
au moins trois tubulures (20.1 à 20.3) pour de la suspension dégazée (2.2) de matières fibreuses sont prévues dans un récipient (3, 3.1 à 3.8), de préférence dans le fond (27) de récipient.

10. Dispositif (1) selon la revendication 9,
**caractérisé en ce que**
les au moins trois tubulures (20.1 à 20.3) pour de la suspension dégazée (2.2) de matières fibreuses sont prévues sur un cercle partiel (K), de préférence uniformément, dans le récipient (3, 3.1 à 3.8), de préférence dans le fond (27) de récipient.

11. Dispositif (1) selon l'une des revendications précédentes,
**caractérisé en ce que**
au moins une autre cloison de séparation (21, 21.1, 21.2) est disposée dans un récipient (3, 3.1 à 3.8) pour l'évacuation de la suspension dégazée (2.2) de matières fibreuses.

12. Dispositif (1) selon l'une des revendications précédentes,
**caractérisé en ce que**
les cloisons de séparation (16, 16.1, 16.2, 21, 21.1, 21.2) montées dans un récipient (3, 3.1 à 3.8) sont disposées symétriquement par rapport à un plan vertical E, passant de préférence par le centre M du récipient (3, 3.1 à 3.8), au moins une cloison de séparation (16, 16.1, 16.2) servant à l'évacuation de la suspension excédentaire (2.1) de matières fibreuses, et au moins une cloison de séparation (21, 21.1, 21.2) servant à l'évacuation de la suspension dégazée (2.2) de matières fibreuses.

13. Dispositif (1) selon l'une des revendications précédentes,
**caractérisé en ce que**
au moins un stabilisateur hydraulique (23) est disposé en aval de l'au moins une tubulure (20, 20.1, 20.2) prévue pour au moins une suspension dégazée (2.2) de matières fibreuses dans un récipient (3, 3.1 à 3.8), de préférence dans le fond (27) de récipient.

14. Dispositif (1) selon la revendication 13,
**caractérisé en ce que**
le stabilisateur hydraulique (23) pour la suspension dégazée (2.2) de matières fibreuses est un récipient de séjour avec une durée de séjour (V_{D}) définie et un volume de séjour (V_{V}) défini, et comporte un contour intérieur optimal du point de vue technique d'écoulement.

15. Dispositif (1) selon la revendication 14,
**caractérisé en ce que**
le contour intérieur optimal du point de vue technique d'écoulement est le contour d'un cylindre oblong et allongé, ou d'un tube conique (24) orienté dans le sens de l'écoulement de la suspension dégazée (2.2) de matières fibreuses.

16. Dispositif (1) selon l'une des revendications précédentes 14 à 16,
**caractérisé en ce que**
la durée de séjour (V_{D}) de la suspension dégazée (2.2) de matières fibreuses dans le stabilisateur hydraulique (23) est comprise entre 2 et 60 secondes, de préférence entre 4 et 25 secondes.

17. Dispositif (1) selon l'une des revendications précédentes 13 à 16,
**caractérisé en ce que**
le volume de séjour (V_{V}) de la suspension dégazée (2.2) de matières fibreuses dans le stabilisateur hydraulique (23) est compris entre 0,8 et 100 m³, de préférence entre 4 et 70 m³.

18. Dispositif (1) selon l'une des revendications précédentes,
**caractérisé en ce que**
les moyens pour générer la dépression dans un récipient (3, 3.1 à 3.8) sont respectivement un raccord de dépression (9), une conduite de dépression (10) et au moins une pompe à dépression (11) avec une conduite (12).

19. Dispositif (1) selon l'une des revendications précédentes 1 à 15,
**caractérisé en ce que**
les moyens pour générer la dépression dans au moins deux récipients (3, 3.1 à 3.8) disposés côte à côte sont une conduite de dépression (10), et au moins une pompe à dépression (11) avec une conduite (12), les récipients (3, 3.1 à 3.8) étant reliés entre eux par un passage à vide (28), et seul un récipient (3, 3.1 à 3.8) comportant un raccord de dépression (9) relié à la conduite de dépression (10).

20. Dispositif (1) selon l'une des revendications précédentes,
**caractérisé en ce que**
plusieurs buses (13), pour l'humidification de la surface intérieure supérieure (14) de récipient qui n'est pas en contact avec la suspension (2, 2a, 2b) de matières fibreuses, sont prévues dans la zone intérieure supérieure d'un récipient (3, 3.1 à 3.8).
